# EUROPÄISCHE PATENTSCHRIFT

(11) **EP 1 863 720 B1**
(45) Veröffentlichungstag und Bekanntmachung des Hinweises auf die Patenterteilung: **15.06.2011**
(21) Anmeldenummer: 06707639.8
(22) Anmeldetag: 23.03.2006
(51) Int. Cl.: B65D 33/20

(54) **WIEDERVERSCHLIESSBARE FOLIEN-VERPACKUNG, INSBESONDERE FLOW-WRAP-VERPACKUNG**
RESOLUBLE FILM PACKAGING, IN PARTICULAR FLOW WRAP PACKAGING
EMBALLAGE EN FILM REFERMABLE, EN PARTICULIER EMBALLAGE TUBULAIRE

(30) Priorität: 23.03.2005 DE 102005013585
(43) Veröffentlichungstag der Anmeldung: 12.12.2007
(73) Patentinhaber: Huhtamaki Ronsberg, Zweigniederlassung der Huhtamaki Deutschland GmbH & Co. KG, 87671 Ronsberg/Allgäu (DE)
(72) Erfinder: FRIEBE, Joachim, 87751 Heimertingen (DE); SCHRAEGLE, Matthias, 87437 Kempten (DE); BAUMANN, Ulrich, 71032 Boeblingen (DE)
(74) Vertreter: Popp, Eugen
(86) Internationale Anmeldenummer: PCT/EP2006/002688
(87) Internationale Veröffentlichungsnummer: WO 2006/100084

(56) Entgegenhaltungen:
- US-A- 4 337 862
- US-A- 5 945 145

## Beschreibung

Die Erfindung betrifft eine Folien-Verpackung, insbesondere flow-wrap-Verpackung mit einer Längs- und zwei Quersiegelnähten, wobei wenigstens die Längssiegelnaht von den zugeordneten Längsrändern beabstandet ist, und zwar unter Ausbildung von zwei unterschiedlich breiten, übereinander und auf die Außenseite der Verpackung gefalteten Längsrandstreifen.

Derartige Verpackungen dienen zum Verpacken von üblicherweise festen, aber auch weichen, gegebenenfalls fließfähigen Gegenständen. Diese werden in einen rechteckförmigen oder quadratischen Folienzuschnitt eingeschlagen. Dadurch entstehen ein der Einschlagkante gegenüberliegender Längsrand sowie zwei sich zwischen diesern und der Einschlagkante erstreckende Querränder. Diese und der Längsrand werden unter Ausbildung von Längs- und zwei Quersiegelnähten miteinander versiegelt, so daß der Gegenstand geschützt vor Umwelteinflüssen sicher verpackt ist. In der Regel erstrecken sich die Quersiegelränder unmittelbar längs der Querräder, d.h. der seitlichen Begrenzung der Verpackung, während die Längssiegelnaht von den zugeordneten Längsrändern des Folienzuschnitts beabstandet ist. Wie eingangs erwähnt, soll die Beabstandung der Längssiegelnaht von den zugeordneten Längsrändern unterschiedlich groß sein, so daß zwei unterschiedlich breite Längsrandstreifen entstehen. Dadurch ist es möglich, die Verpackung bequem vom Längsrand her zu öffnen. Es brauchen lediglich die beiden jeweils zwischen Längssiegelnaht und Längsrand definierten sowie unmittelbar aufeinander liegenden Längsrandstreifen mittels der beiden Daumen oder zweier Finger aufgeblättert und dann jeweils zwischen Daumen und Finger festgeklemmt zu werden. Dann lassen sich die beiden Längsrandstreifen auseinander ziehen unter Öffnung der Längssiegelnaht. Dadurch, daß der eine Längsrandstreifen breiter ist als der andere Längsrandstreifen, wird das Aufblättern der beiden Längsrandstreifen erheblich erleichtert. Herkömmlich ist der eine Längsrandstreifen um etwa 1,0 mm bis 2,0 mm breiter als der andere Längsrandstreifen. Der Kleber auf dem überstehenden Teil des breiteren Längsrandstreifens ist in Form wenigstens eines sich parallel zur Längserstreckung dieses Längsrandstreifens erstreckenden Kleberstreifens aufgetragen.

US 5 945 145 offenbart eine Verpackung gemäß dem Oberbegriff des Anspruchs 1.

Der vorliegenden Erfindung liegt die Aufgabe zugrunde, eine Folien-Verpackung der genannten Art zu schaffen, die sich einfach öffnen läßt.

Diese Aufgabe wird erfindungsgemäß durch die kennzeichnenden Merkmale des Anspruches 1 gelöst. Vorteilhafte konstruktive Details und Ausführungsformen sind in den Unteransprüchen beschrieben.

Zur erleichterten Herstellung, aber insbesondere auch zur erleichterten Öffnung der Verpackung sind die den Quersiegelnähten zugewandten Querrandbereiche des überstehenden Teils des breiteren Längsrandstreifens kleberfrei gehalten. Damit können die auf die Außenseite der Verpackung aufgeklebten Längsrandstreifen sehr einfach von den Querrändern der Verpackung her geöffnet werden. Die Querrandbereiche der Längsrandstreifen bilden somit jeweils eine Art Grifflasche, mittels der die Klebung zwischen dem überstehenden Teil des breiteren Längsrandstreifens und der zugeordneten Außenseite der Verpackung sehr leicht gelöst werden kann. Vorzugsweise werden gleichzeitig beide Querrandbereiche der übereinander gefalteten Längsrandstreifen zwischen Daumen und Zeigefinger geklemmt und von der Außenseite der Verpackung nach oben gedreht, so daß die Längsrandstreifen sich jeweils etwa senkrecht zur Außenseite der Verpackung bzw. zum Packungsinhalt erstrecken. Anschließend lassen sich die beiden Längsrandstreifen dann in der eingangs erwähnten Art aufblättern und unter Öffnung der Längssiegelnaht auseinander ziehen.

Vorzugsweise ist zumindest ein Teil der Längssiegelnaht wiederverklebbar, insbesondere durch aufeinander liegende, mehrfach wiederverklebbare Kaltkleberstreifen. Auch die Quersiegelnähte können wiederverklebbar ausgebildet sein.

Grundsätzlich ist es jedoch auch denkbar, sowohl die Längssiegelnaht als auch die Quersiegelnähte als Heißsiegelnähte auszubilden mit der Konsequenz, daß sie nach Öffnung nicht wiederverklebbar sind. Ein Wiederverschluß der Verpackung kann dann nur noch im Längsrandbereich erfolgen, auch wenn dieser Wiederverschluß nur unvollständig ist. Die Verpackung besteht vorzugsweise aus einem quadratischen oder rechteckförmigen Folienzuschnitt, an dessen einen Seite Kleber, insbesondere Kaltkleber in Form eines quadratischen oder rechteckförmigen Rahmens aufgetragen ist, wobei die einen zwei gegenüberliegenden Kleber streifen im wesentlichen unmittelbar längs der entsprechenden Ränder des Verpackungsfolienzuschnitts, und die anderen zwei gegenüberliegenden Kleber streifen von den zugeordneten Rändern des Zuschnitts beabstandet, und zwar unterschiedlich beabstandet sind.

Gemäß einer Ausführungsform der Erfindung ist zumindest die "release"-Fläche, die einem öffenbaren Kaltkleberstreifen zugeordnet ist, mit einem Release-Lack versehen. Der Release-Lack ist entweder vollflächig auf der "release"-Fläche verteilt oder wenigstens abschnittsweise, beispielsweise in Form von Punkten, Kreisen oder Streifen, so auf der "release"-Fläche angeordnet, daß ein Öffnen der Folienverpackung unter geringem Kraftaufwand möglich ist.

Ferner kann der Release-Lack auch auf der Seite der die Folienverpackung bildenden Folie angeordnet sein, die der Kleberbeschichtung entgegengesetzt ist. Es handelt sich dabei um die der Kleberbeschichtung gegenüberliegende Seite der Folie. Vorzugsweise ist der Release-Lack nicht vollflächig auf der Rückseite der Folie verteilt, sondern insbesondere im Bereich der Rückseite der Kleberstreifen in Quer- und/oder Längsrichtung, d.h. in Release-Bereichen, angebracht. Es kann selbstverständlich jedoch auch vorgesehen sein, den Release-Lack vollflächig oder nahezu vollflächig auf der Rückseite der Folie vorzusehen. Auch in den Release-Bereichen kann der Release-Lack in Form von Muster(n) aufgebracht sein.

Im übrigen sei darauf hingewiesen, daß die die Folienverpackung bildende Folie selbst gegenüber einem Kaltkleber Release-Eigenschaften aufweist, die jedoch gegenüber den Release-Eigeaschaften eines Release-Lacks gegenüber Kaltkleber deutlich schwächer ausgeprägt sind. Auf diese Weise ist es möglich, eine einseitig zumindest abschnittsweise mit einer Kaltkleberschicht versehene Folie auf einer Rolle zur Verfügung zu stellen, von welcher die Folie zur Herstellung von Folienzuschnitten abrollbar ist. Je nach Klebefähigkeit des Kaltklebers kann an durch die Wicklung oder eine Stapelung besonders druckbelasteten Bereichen der Folie auf der Rolle in diesen Bereichen zusätzlich zu den Release-Eigenschaften der Folie selbst ein Release-Lack vorgesehen sein, so daß besonders gute Release-Eigenschaften durch die Aufbringung von Release-Lack gewährleistet sind und eine gute Abwickelbarkeit von der Rolle oder Abnehmbarkeit von einem Stapel möglich ist.

Nachstehend wird eine Ausführungsform einer erfindungsgemäß ausgebildeten Verpackung anhand der beigefügten Zeichnungen näher beschrieben. Es zeigen:
- Fig. 1: einen rechteckförmigen Zuschnitt für eine erfindungsgemäße flow-wrap- Verpackung in Draufsicht auf diejenige Seite, an der Kaltkleberstreifen für die Ausbildung von Längs- und Quersiegelnähten aufgetragen sind;
- Fig. 2: eine fertiggestellte Verpackung in Draufsicht auf diejenige Seite, an der zwei Längsrandstreifen übereinander auf die Außenseite der Verpackung gefaltet sind;
- Fig. 3: die Verpackung gemäß Fig. 2 in Stirnansicht; und
- Fig. 4: die Verpackung entsprechend Fig. 3 mit von der Außenseite der Ver packung hochgefalteten Längsrandstreifen, ebenfalls in Stirnansicht.

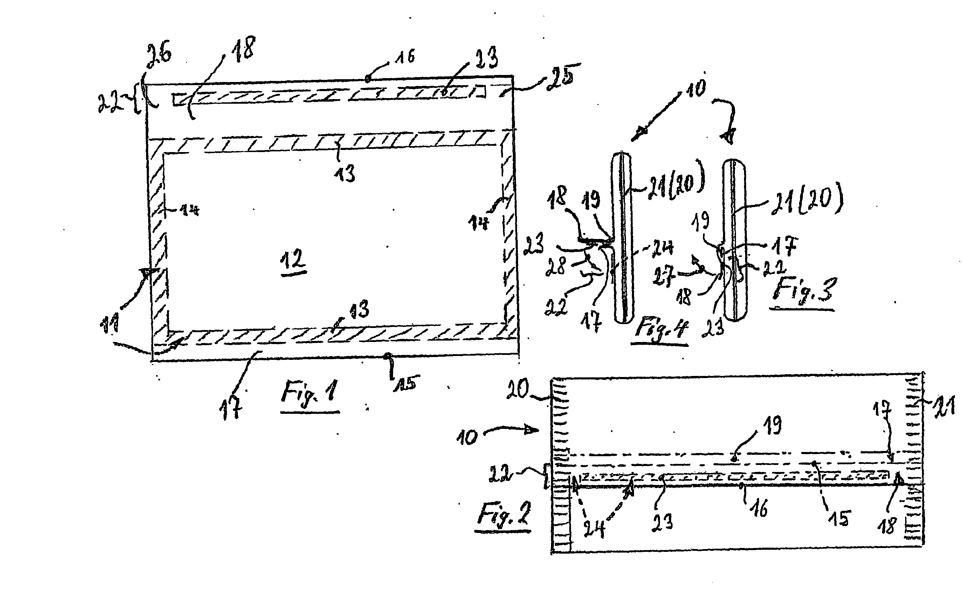

Wie bereits einleitend dargestellt, wird eine flow-wrap-Verpackung 10 (siehe Figuren 2, 3 und 4) aus einem quadratischen oder rechteckförmigen (wie hier gemäß Fig. 1) Folienzuschnitt 12 hergestellt. Dieser Folienzuschnitt 12 ist entsprechend Fig. 1 an einer Seite mit einem Kaltkleber versehen. Der Kaltkleber ist in Form eines rechteckförmigen Rahmens 11 aufgetragen, wobei die einen zwei gegenüberliegenden Kaltkleberstreifen 14 unmittelbar längs der entsprechenden Ränder des Verpackungsfolienzuschnitts 12, und die anderen zwei gegenüberliegenden Kaltkleberstreifen 13 von den zugeordneten Rändern 15, 16 des Verpackungsfolienzuschnitts 12 beabstandet, und zwar unterschiedlich beabstandet sind. Die Kaltkleberstreifen 13 dienen also zur Bildung einer Längssiegelnaht 19 (siehe Figuren 2, 3 und 4), während die Kaltkleberstreifen 14 übereinander gelegt die beiden Quersiegelnähte 20, 21 definieren.

Dadurch, daß die beiden Längsränder 15, 16 von den Kaltkleberstreifen 13 und damit auch von der gemeinsamen Längssiegelnaht 19 unterschiedlich beabstandet sind, entstehen zwei unterschiedlich breite Längsrandstreifen 17, 18. Wie insbesondere den Figuren 3 und 4 entnommen werden kann, ist an dem den schmäleren Längsrandstreifen 17 überstehenden Teil 22 des breiteren Längsrandstreifens 18 ein wiederverklebbarer Kleber, insbesondere Kaltkleber in Form eines Kaltkleberstreifens 23 aufgetragen, der bei verschlossener Verpackung entsprechend den Figuren 2 und 3 auf eine an der Außenseite der Verpackung 10 ausgebildete "release"-Fläche 24 aufklebbar ist. Diese "release"-Fläche 24 ist in Fig. 4 gestrichelt dargestellt. In Fig. 2 ist die "release"-Fläche 24 durch den überstehenden Teil 22 des breiteren Längsrandstreifens 18 verdeckt. Gleiches gilt auch im Schließzustand der Verpackung entsprechend Fig. 3.

Diese "release"-Fläche wird durch eine entsprechende Lackschicht gebildet.

Die beiden den Quersiegelnähten 20, 21 zugeordneten Querrandbereiche 25, 26 des überstehenden Teils 22 des breiteren Längsrandstreifens 18 sind, wie insbesondere der Fig. 1 entnommen werden kann, kleberfrei gehalten. Dadurch sind die Querrandbereiche 25, 26 bei verschlossener Verpackung 10 nicht mit der Außenseite der Verpackung verklebt mit der Folge, daß in diesen Bereichen eine Art Grifflaschen entstehen, mit denen sich die übereinander gefalteten Längsrandstreifen 17, 18 entsprechend Pfeil 27 in Fig. 3 aufrichten lassen in eine Stellung entsprechend Fig. 4. Beim Wiederverschließen erfolgt eine Umfaltung der beiden Längsrandstreifen 17, 18 in entgegengesetzter Richtung auf die Außenseite der Verpackung entsprechend Pfeil 28 in Fig. 4.

Der Kaltkleber besteht für den Kaltkleberstreifen 23 vorzugsweise aus einem Material auf Acrylbasis. Dieses Material erlaubt eine mindestens dreimalige, insbesondere bis zu zehn-fünfzehnmalige Wiederverklebung, ohne daß die Schließkraft merklich darunter leidet. Selbst nach fünfzehnmaliger Wiederverklebung soll die Schließkraft noch etwa 50 % bis 60 % der Erstschließkraft besitzen.

### Bezugszeichenliste

- 10: flow-wrap-Verpackung
- 11: Kaltkleber-Rahmen
- 12: Zuschnitt
- 13: Kaltkleberstreifen (zur Bildung einer Längssiegelnaht)
- 14: Kaltkleberstreifen (zur Bildung von zwei Quersiegelnähten)
- 15: Längsrand
- 16: Längsrand
- 17: Längsrandstreifen
- 18: Längsrandstreifen
- 19: Längssiegelnaht
- 20: Quersiegelnaht
- 21: Quersiegelnaht
- 22: überstehender Teil des Längsrandstreifens 18
- 23: Kaltkleberstreifen
- 24: "release"-Fläche
- 25: Querrandbereich
- 26: Querrandbereich
- 27: Pfeil
- 28: Pfeil

## Patentansprüche

1. Folien-Verpackung, insbesondere flow-wrap-Verpackung (10) mit einer Längs(19)- und zwei Quersiegelnähten (20, 21), wobei wenigstens die Längssiegelnaht (19) von den zugeordneten Längsrändern (15, 16) beabstandet ist, und zwar unter Ausbildung von zwei unterschiedlich breiten, übereinander und auf die Außenseite der Verpackung (10) gefalteten Längsrandstreifen (17, 18), wobei an dem den schmäleren Längsrandstreifen (17) überstehenden Teil (22) des breiteren Längsrandstreifens (18) ein wiederverklebbarer Kleber, insbesondere Kaltkleber (23) aufgetragen ist, wobei
der wiederverklebbare Kleber bei verschlossener Verpackung (10) auf eine an der Außenseite derselben ausgebildete "release"-Fläche (24) aufklebbar ist, wobei der Kleber in Form wenigstens eines sich parallel zur Längserstreckung der Längsrandstreifen (17, 18) erstreckenden Kaltkleberstreifens (23) aufgetragen ist,
**dadurch gekennzeichnet, daß**
den Quersiegelnähten (20, 21) zugewandte Querrandbereiche (25, 26) in jeweiliger Verlängerung des Kaltkleberstreifens (23) kleberfrei gehalten sind.

2. Verpackung nach Anspruch 1,
**dadurch gekennzeichnet, daß**
zumindest ein Teil der Längssiegelnaht (13) wiederverklebbar, insbesondere durch aufeinanderliegende, mehrfach wiederverklebbare Kaltkleberstreifen (13) gebildet ist.

3. Verpackung nach einem der Ansprüche 1 oder 2,
**dadurch gekennzeichnet, daß**
sie aus einem quadratischen oder rechteckförmigen Folienzuschnitt (12) besteht, an dessen einen Seite Kleber, insbesondere Kaltkleber in Form eines quadratischen oder rechteckförmigen Rahmens (11) aufgetragen ist, wobei die einen zwei gegenüberliegenden Kleberstreifen (14) im wesentlichen unmittelbar längs der entsprechenden Ränder des Verpackungsfolienzuschnitts (12), und die anderen zwei gegenüberliegenden Kleberstreifen (13) von den zugeordneten Rändern (15, 16) des Zuschnitts (12) beabstandet, und zwar unterschiedlich beabstandet sind.

4. Verpackung nach einem der vorhergehenden Ansprüche,
**dadurch gekennzeichnet, daß**
zumindest die "release"-Fläche (24) zumindest abschnittsweise einen Release-Lack aufweist.

5. Verpackung nach einem der vorhergehenden Ansprüche,
**dadurch gekennzeichnet, daß**
eine die Folienverpackung bildende Folie auf ihrer einer Kleberbeschichtung abgewandten Seite, insbesondere im Bereich der Rückseite der Kleberstreifen in Quer- und/oder Längsrichtung, einen Release-Lack aufweist.

6. Verpackung nach einem der Ansprüche 4 oder 5,
**dadurch gekennzeichnet, daß**
die die Folienverpackung bildende Folie gegenüber dem Kaltkleber Release-Eigenschaften aufweist, die gegenüber den Release-Eigenschaften des Release-Lacks schwächer ausgeprägt sind.

7. Verpackung nach einem der Ansprüche 1 bis 6,
**dadurch gekennzeichnet, daß**
der Kaltkleber aus einem Material auf Acrylbasis besteht, und eine mindestens dreimalige, insbesondere bis zu zehn-fünfzehnmalige Wiederverklebung erlaubt, ohne daß die Schließkraft merklich darunter leidet (d.h. wenigstens noch etwa 50-60 % der Erstschließkraft besitzt).

8. Verpackung nach einem der Ansprüche 1 oder 3 bis 7,
**dadurch gekennzeichnet, daß**
die Längs- und Quersiegelnähte jeweils als nicht-wiederverklebbare Heißsiegelnähte ausgebildet sind.

## Claims

1. Film packaging, especially flow-wrap packaging (10) having a longitudinal sealed seam (19) and two transverse sealed seams (20, 21), at least the longitudinal sealed seam (19) being spaced apart from the associated longitudinal edges (15, 16) to form two longitudinal edge strips (17, 18) of different widths which are folded one over the other and onto the outside of the packaging (10), a restickable adhesive, especially a cold-seal adhesive (23), having been applied to the portion (22) of the wider longitudinal edge strip (18) that overhangs the narrower longitudinal edge strip (17), the restickable adhesive being arranged to be stuck, when the packaging (10) is closed, to a "release" area (24) formed on the outside of the packaging, the adhesive having been applied in the form of at least one cold-seal adhesive strip (23) extending parallel to the longitudinal extent of the longitudinal edge strips (17, 18),
**characterized in that**
transverse edge regions (25, 26) that face the transverse sealed seams (20, 21), which edge regions each form a region continuing on from the cold-seal adhesive strip (23), are kept free of adhesive.

2. Packaging according to claim 1,
**characterized in that**
at least a portion of the longitudinal sealed seam (13) is formed so as to be restickable, especially by means of cold-seal adhesive strips (13) lying one on top of the other which are capable of multiple resticking.

3. Packaging according to either one of claims 1 and 2,
**characterized in that**
it consists of a square or rectangular film blank (12), to one side of which adhesive, especially cold-seal adhesive, has been applied in the form of a square or rectangular frame (11), the first two opposing adhesive strips (14) lying substantially directly along the corresponding edges of the packaging film blank (12) and the other two opposing adhesive strips (13) being spaced apart, and by different amounts, from the associated edges (15, 16) of the blank (12).

4. Packaging according to any one of the preceding claims,
**characterized in that**
at least the "release" area (24) has, at least in some regions, a release lacquer.

5. Packaging according to any one of the preceding claims,
**characterized in that**
a film forming the film packaging has a release lacquer on its side remote from an adhesive coating, especially in the region of the rear side of the adhesive strips in the transverse and/or longitudinal direction.

6. Packaging according to either one of claims 4 and 5,
**characterized in that**
the film forming the film packaging has release properties with respect to the cold-seal adhesive, which properties are less marked than the release properties of the release lacquer.

7. Packaging according to any one of claims 1 to 6,
**characterized in that**
the cold-seal adhesive consists of an acrylic-based material and allows resticking at least three times, especially up to ten to fifteen times, without the closure strength being appreciably affected (that is to say still exhibiting at least about from 50 % to 60 % of the initial closure strength).

8. Packaging according to any one of claims 1 or 3 to 7,
**characterized in that**
the longitudinal and transverse sealed seams are each in the form of non-restickable heat-sealed seams.

## Revendications

1. Emballage en film, en particulier emballage tubulaire (10), présentant un joint soudé longitudinal (19) et deux joints soudés transversaux (20, 21), au moins le joint soudé longitudinal (19) étant espacé des bords longitudinaux (15, 16) associés, et ce en réalisant deux bandes de bord longitudinal (17, 18) de largeur différente, pliées l'une sur l'autre et sur le côté extérieur de l'emballage (10), une colle recollable, en particulier une colle à froid (23) étant appliquée sur la partie faisant saillie (22) de la bande de bord longitudinal la plus étroite (17) de la bande de bord longitudinal la plus large (18), la colle recollable pouvant être collée, lorsque l'emballage est fermé (10), sur une surface « antiadhésive » (24) réalisée sur le côté extérieur de celui-ci, la colle étant appliquée sous la forme d'au moins une bande de colle à froid (23) s'étendant parallèlement à l'étendue longitudinale des bandes de bord longitudinal (17, 18), **caractérisé en ce que** des zones de bord transversal (25, 26) tournées vers les joints soudés transversaux (20, 21) sont maintenues sans colle dans le prolongement respectif de la bande de colle à froid (23).

2. Emballage selon la revendication 1,
**caractérisé en ce**
**qu'**au moins une partie du joint soudé longitudinal (13) est formée de manière recollable, en particulier par des bandes de colle à froid (13) se trouvant les unes sur les autres, recollables à plusieurs reprises.

3. Emballage selon l'une quelconque des revendications 1 ou 2,
**caractérisé en ce**
**qu'**il se compose d'une coupe de film (12) carrée ou rectangulaire, sur un côté de laquelle de la colle, en particulier de la colle à froid est appliquée sous la forme d'un cadre carré (11) ou rectangulaire, les deux bandes de colle (14) opposées étant espacées sensiblement directement le long des bords correspondants de la coupe de film d'emballage (12), et les deux autres bandes de colle (13) opposées étant espacées des bords associés (15, 16) de la coupe (12), c'est-à-dire étant espacées différemment.

4. Emballage selon l'une quelconque des revendications précédentes,
**caractérisé en ce**
**qu'**au moins la surface « antiadhésive » (24) présente au moins par endroits un vernis antiadhésif.

5. Emballage selon l'une quelconque des revendications précédentes,
**caractérisé en ce**
**qu'**un film formant l'emballage en film présente un vernis antiadhésif sur son côté éloigné d'un revêtement de colle, en particulier dans la zone du côté arrière des bandes de colle dans le sens transversal et/ou longitudinal.

6. Emballage selon l'une quelconque des revendications 4 ou 5,
**caractérisé en ce**
**que** le film formant l'emballage en film présente des propriétés antiadhésives par rapport à la colle à froid, lesquelles sont moins prononcées que les propriétés antiadhésives du vernis antiadhésif.

7. Emballage selon l'une quelconque des revendications 1 à 6,
**caractérisé en ce**
**que** la colle à froid se compose d'un matériau à base d'acrylique, et permet un recollage au moins triple, en particulier jusqu'à dix à quinze fois sans que la force de serrage n'en souffre sensiblement (c'est-à-dire possède au moins encore environ 50-60 % de la force de serrage initiale).

8. Emballage selon l'une quelconque des revendications 1 ou 3 à 7,
**caractérisé en ce**
**que** les joints soudés longitudinaux et transversaux sont réalisés respectivement comme des joints thermosoudés non recollables.
